# EUROPEAN PATENT APPLICATION

(11) **EP 4 427 998 A1**
(43) Date of publication of application: **11.09.2024**
(21) Application number: 22907851.4
(22) Date of filing: 09.12.2022
(51) Int. Cl.: B60W 60/00, B60W 50/029, B60W 30/182, B60W 30/18, G05D 1/00

(54) **IN-VEHICLE AUTONOMOUS DRIVING SYSTEM FOR SUPPORTING SWITCHING BETWEEN DRIVING MODES**

(30) Priority: 16.12.2021 KR 20210180450
(71) Applicant: Korea Automotive Technology Institute, Chungcheongnam-do 31214 (KR)
(72) Inventor: YU, Si Bok, Cheonan-si Chungcheongnam-do 31214 (KR); PARK, Jeong Tae, Cheonan-si Chungcheongnam-do 31214 (KR); LEE, Yong Ki, Cheonan-si Chungcheongnam-do 31214 (KR); SHIN, Yu Yeong, Cheonan-si Chungcheongnam-do 31214 (KR); SONG, Moon Hyung, Cheonan-si Chungcheongnam-do 31214 (KR)
(74) Representative: BCKIP Part mbB
(86) International application number: PCT/KR2022/020002
(87) International publication number: WO 2023/113384

(57) **Abstract**

The present invention relates to an autonomous driving system for switching between an autonomous driving mode and a manual driving mode in an autonomous driving situation, and a fallback method for an autonomous driving failure situation in the autonomous driving system, according to the present invention, comprises the steps of: predicting whether, on a route a vehicle is traveling, the vehicle will deviate from an operational design domain (ODD) in which autonomous driving is possible; and when deviation is predicted, performing a minimal risk maneuver (MRM) process for controlling the vehicle so as to respond to an autonomous driving failure situation at a deviation point. According to the present invention, stability of the autonomous driving system when an emergency situation occurs may be increased, and by proposing the stable mode switching method of the autonomous driving system, a best response method may be provided.

## Description

### [Technical Field]

The present invention relates to an autonomous driving system for switching between an autonomous driving mode and a manual driving mode in an autonomous driving situation.

### [Background Art]

Typically, an autonomous driving system may refer to a technology for selecting an optimal driving route and enabling autonomous driving by using a lane deviation prevention technique, a vehicle change control technique, an obstacle avoidance control technique, or the like, and indicate a technology related to vehicle driving, which allows a vehicle to reach its destination on its own without a driver having to operate a steering wheel, an accelerator pedal, or a brake.

The vehicle that drives itself without the driver having to operate the vehicle is a technology spotlighted in a next-generation vehicle industry. In accordance with a trend of this era, many vehicle companies are developing the technology for an autonomous vehicle.

Several core technologies may be required to realize the autonomous driving technology. For example, required are a highway driving assist (HDA) technique that automatically maintains a distance between vehicles on a highway, a lane keeping assist system (LKAS), a rear blind spot detection (BSD) system, a cruise control (or advanced smart cruise control), an autonomous emergency braking (AEB) system, and the like.

According to the Society of Automotive Engineers (SAE), the autonomous vehicle is classified into levels zero to 5, from a driver assistance system (or advanced driver assistance system (ADAS)) to a complete autonomous vehicle (or automatic driving system (ADS)), and the autonomous vehicle, which requires no driver assistance, is classified into a system of level 3 or higher. It is specified that in the system of level 3, an emergency fallback user (or fallback ready user (FRU)) has to provide a fallback for an emergency situation, and in the system of level 4 or higher, the autonomous vehicle is required to be able to fall back on itself even if the emergency situation such as a failure occurs. Here, the fallback of the autonomous vehicle indicates control (or minimal risk maneuver (MRM)) for automatically performing a transition to a minimal risk condition (MRC) in case of the failure.

Therefore, a more detailed operation definition may be required for stability based on a situation of the autonomous vehicle.

### [Disclosure]

### [Technical Problem]

An object of the present invention is to propose a method for switching between an autonomous driving mode and a manual driving mode in an autonomous driving situation.

An object of the present invention is to propose a specific method for providing a fallback for a failure situation among various situations of autonomous driving.

### [Technical Solution]

According to an embodiment, provided is a method for providing a fallback for a failure situation occurring in autonomous driving performed by an autonomous driving system, the method including: predicting whether a vehicle deviates from an operational design domain (ODD) where the vehicle performs the autonomous driving on a route while the vehicle drives; and performing a minimal risk maneuver (MRM) process of controlling the vehicle to provide the fallback for the failure situation occurring in the autonomous driving based on a deviation point when the deviation is predicted.

The MRM process may include making a request for a vehicle driver to intervene in the autonomous driving at a time point when the deviation is predicted or in advance from the time point, and changing a driving mode to a manual driving mode when a vehicle control right is given over to the driver by the driver intervention (or override).

The MRM process may include instructing an emergency stop of the vehicle when the driver intervention is impossible.

The MRM process may be classified into necessary control operations based on a MRM type that determines a stop type by a diagnosis result of a failure cause of the vehicle.

The MRM process may request safe zone information required based on the MRM type, and generate a route for the vehicle to stop on a received safe zone.

The method may further include receiving a remote request to perform the MRM process from a control server when the deviation from the ODD or occurrence of the failure situation is determined as a monitoring result while the vehicle drives, wherein the control server provides the safe zone information when making the request to perform the MRM process.

### [Advantageous effect]

According to the present invention, it is possible to increase the stability of the autonomous driving system when the emergency situation occurs.

In addition, the present invention may provide the best fallback method by proposing the stable mode switching method of the autonomous driving system.

In addition, the present invention may enable the safer fallback by implementing the request for the driver to intervene in the MRM operation or the safe zone search in advance.

### [Description of Drawings]

FIG. 1 is an example diagram showing an autonomous driving system according to an embodiment of the present invention.
FIGS. 2 and 3 are exemplary diagrams each showing a minimal risk maneuver (MRM) operation of the autonomous driving system according to an embodiment of the present invention.
FIGS. 4 to 9 are timing diagrams showing a process of the autonomous driving system according to an embodiment of the present invention.

### [Best Mode]

The following description only exemplifies a principle of the present invention. Therefore, those skilled in the art may implement the principle of the present invention and invent various devices included in the spirit and scope of the present invention although not clearly described or shown in the specification. In addition, it is to be understood that all conditional terms and embodiments mentioned in the specification are obviously intended only to allow those skilled in the art to understand a concept of the present invention in principle, and the present invention is not limited to the embodiments and states particularly mentioned as such.

The above-mentioned objects, features, and advantages will become more obvious from the following detailed description provided in relation to the accompanying drawings. Therefore, those skilled in the art to which the present invention pertains may easily practice the spirit of the present invention.

Further, in describing the present invention, omitted is a detailed description of a case where it is determined that a detailed description of well-known technology related to the present invention may unnecessarily make the gist of the present invention unclear. Hereinafter, an embodiment of the present invention will be described in detail with reference to the accompanying drawings.

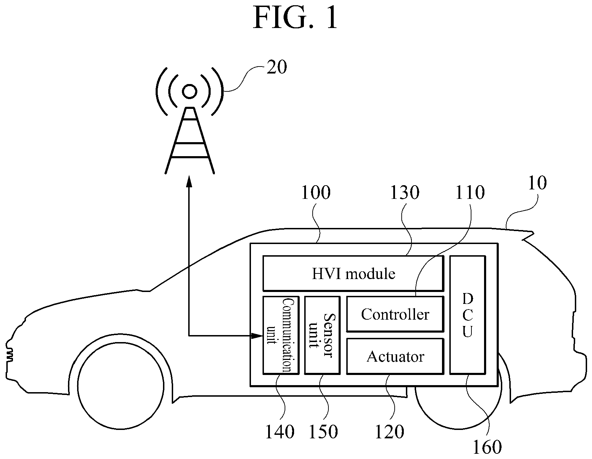

FIG. 1 is a diagram showing a configuration of an autonomous driving system (ADS) 100 in a vehicle 10 according to an embodiment of the present invention.

Referring to FIG. 1, an autonomous driving system 100 according to this embodiment may include a human vehicle interface (HVI) module 130 for interface between a user and the vehicle 10, a communication unit 140, a sensor unit 150, a (autonomous driving) controller 110, a domain control unit (DCU) 160, and an actuator 120.

The HVI module 130 may be configured for the interface between the autonomous vehicle 10 and the user, and guarantee the convenience and safety of a driver by including a driver monitoring system (or driver status monitoring system (DSM)) that determines a driver status, a driver vehicle interface (HVI) that actively recognizes a driving mode of the vehicle 10 and provides an optimized interface, and a display for the HVI that visually displays the same.

That is, the HVI module 130 may detect the driver status through a vision sensor or various sensors and simultaneously detect and analyze the driving mode or external driving environment of the vehicle 10, determine an operation load or an abnormal situation, and inform the driver of the situation through various types of interfaces. In addition, the driver may recognize a control situation of the vehicle 10, thus checking the driving mode of the vehicle 10 and determining whether to directly intervene in the driving. In addition, the HVI module 130 may provide information to determine whether a current driving mode is an autonomous driving mode or a manual driving mode, and display a change in the driving mode.

The communication unit 140 may be a device for transmitting and receiving data from the outside by using various information and communication technologies such as a telematics system, and use cellular communications (e.g., 4th generation (4G) and long term evolution (LTE)), a wireless access in vehicular environment (WAVE), or the like as its communication technology. This communication technology may enable communications between the vehicle 10 and the vehicle 10 (i.e., vehicle to vehicle) or communication between the vehicle 10 and a road side unit (RSU) (i.e., vehicle to infrastructure (V2I)).

The sensor unit 150 may be a device for detecting the mode and external environment of the vehicle 10, and acquiring surrounding information for autonomous driving, and the sensor unit may include a camera, a radar unit, an infrared (IR) sensor, a light detection and ranging (LIDAR) sensor, an acoustic sensor, or the like.

Various sensor modules in the sensor unit 150 may be mounted directly on the vehicle 10 for the autonomous driving, and disposed in optimal positions for acquiring information within a determined sensing range based on the size or structure of the vehicle 10.

In addition, the sensor unit 150 may be a sensor for measuring the position or behavior of the vehicle 10 itself, and include a gyroscope, an acceleration sensor, or the like, through which the sensor unit 150 may internally identify the current driving mode of the vehicle 10.

The autonomous driving controller 110 may be a device generating and outputting a control instruction for an operation of the autonomous vehicle 10, and classified into various modules based on a function of the processor to control the behavior for the autonomous driving.

For example, the autonomous driving controller 110 may include an adaptive cruise control (ACC) module that performs adaptive cruise control through deceleration or acceleration control together with a controller for basic steering, acceleration, or deceleration, a module for lane maintenance and change (such as lane centering, in-Lane driving, lane change, or lane-keeping), a module for turning left or right, a module for vehicle stop, a module for controlling a driving operation based on an urban environment such as an intersection or a stop, or the like.

In addition, the autonomous driving controller 110 may also include a minimal risk maneuver (MRM) module for executing MRM and a module for a normal or emergency stop based on the MRM.

However, these internal components of the autonomous driving controller 110 may be integrated into and operated as one system. Therefore, the entire autonomous driving system 100 may be unable to be operated due to a failure of a communication line related to the sensor or a power supply problem.

Therefore, the autonomous driving system 100 in this embodiment may classify the autonomous driving controller 110 and independently manage the same.

For example, the autonomous driving controller 110 may be classified into a first controller and a second controller. The first controller may be a basic controller and include modules for low-level driving control, and the second controller may include modules for higher-level practical autonomous driving control.

Here, the first and second controllers may be classified physically, or by separating powers applied thereto and connection relationships with networks, in a software manner. In addition, some of components in the first controller or components in the second controller may be overlapped and designed in both the controllers.

That is, through the separated powers and networks of the first and second controllers and the overlapped design of their essential components, it is possible to minimize a risk situation during the autonomous driving and, preferably perform an essential operation for the MRM.

The actuator 120 may be a mechanical device for actual driving of the vehicle 10, and implemented as an actuator for a steering operation, an actuator for acceleration, or an actuator for deceleration.

The domain control unit (DCU) 160 may be configured to control the sensor, the actuator, or the like for driving the vehicle. The DCU 160 may be a domain control device that includes a central processing unit more unified than conventional electronic control units (ECUs) distributed for respective components in the vehicle, such as a powertrain, an advanced driver assistance system (ADAS) module, and a vehicle body. The DCU 160 may integrate the modules necessary for the autonomous driving, and control the same.

In addition, an autonomous driving recording module (not shown) may include an autonomous driving recording device (ADR) and an edge data logging device (or edge logger), and may store information such as driving records or control based on sensing information.

A map module may include a global navigation satellite system (GNSS) antenna, a map and positioning module, and a navigation display. Therefore, the map module may set a destination, generate a route, and provide navigation information based on a vehicle current location.

The autonomous driving system 100 according to this embodiment described hereinabove is to provide a safe fallback by using an independent structure in a case where an emergency situation occurs in the autonomous driving due to a failure in the system or the problem in the power or the communication network.

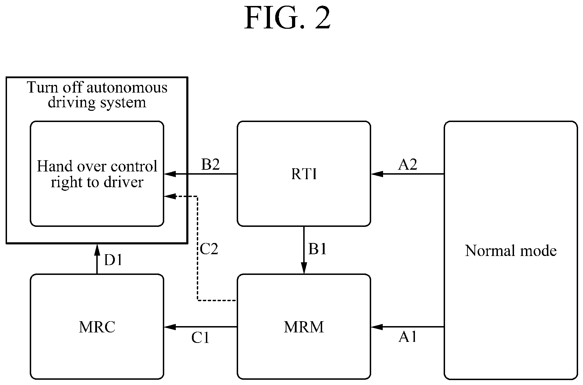

Therefore, in first describing a process of providing the fallback for this situation with reference to FIG. 2, when detecting the abnormal situation described above in the autonomous driving during a normal driving mode, the autonomous driving system 100 may first trigger an MRM operation mode (21), and perform control operations defined in the MRM until the control operations reaches a minimal risk condition (MRC). The autonomous driving system 100 may directly perform a change in the driving mode, and generate a request to intervene (RTI) in the autonomous driving by the driver before triggering the MRM to stop the vehicle (22).

In the request to intervene step, the autonomous driving system 100 may request the user (or fallback ready user) who is ready to perform the fallback for a failure situation to take over a driving control right (24) . However, in a case of level 4 or higher of the autonomous driving, the driver may not exist, and this step may be performed selectively.

In addition, when a timeout occurs even though the take-over of the control right is requested, the autonomous driving system 100 may change the mode to the MRM mode (23), and perform the defined MRM operation.

Here, the MRM may include a series of operations of controlling the autonomous driving system 100 until the vehicle 10 reaches the MRC, and in a MRM situation, the autonomous driving system 100 may perform operations of determining a MRM type, informing the driver that the MRM operation is performed, or the like. Even in the MRM mode, the control right may be given over to the driver based on whether the driver intervenes (26).

In a mode where a risk is minimized through the MRM, for example, when the vehicle stops in a safe zone, and the vehicle thus reaches the MRC (25), the autonomous driving system 100 may hand over the control right to the driver (27), thereby allowing the driver to resume or return to the autonomous driving when the failure situation is resolved.

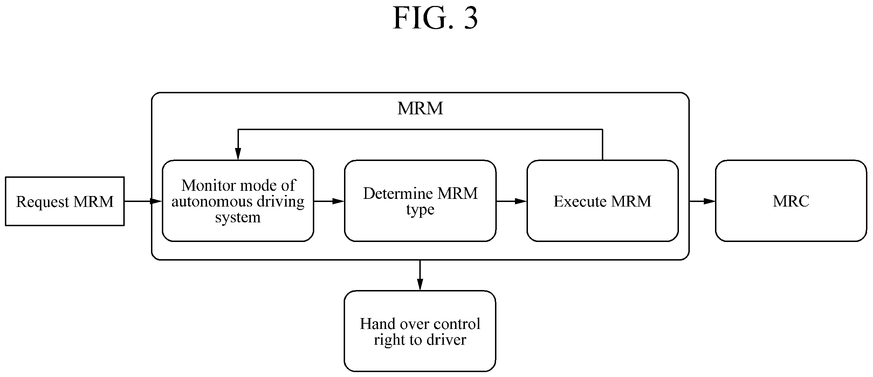

In detail, in describing the operation based on the MRM and the MRC with reference to FIG. 3, when a problem occurs with the normal performance of the autonomous driving, the autonomous driving system 100 may first request the MRM operation in a case where there is no control right given over to the driver (21).

When receiving the request for the MRM, the MRM module in the autonomous driving system 100 may monitor a mode of the autonomous driving system 100 (32), and determine the MRM type by identifying a vehicle internal environment and an external environmental factor such as a safe zone situation based on a failure state or severity of the failure state (33). The MRM module may classify the MRM type based on a stop situation, and classify the MRM type into straight stop, in-lane stop, and adjacent lane stop.

The straight stop may indicate, for example, that in the most urgent situation, braking is performed in a direction in which the vehicle 10 is currently driving to thus cause the vehicle 10 to stop. Therefore, the autonomous driving system 100 may not require lateral control, the acceleration control (or acceleration), or lane change control, and perform the deceleration control (or deceleration) for the braking.

The in-lane stop may indicate that the braking is performed in a direction for maintaining a lane where the vehicle 10 is currently driving to thus cause the vehicle 10 to stop. Therefore, the autonomous driving system 100 may not require the acceleration control (or acceleration), or the lane change control, and perform the lateral control to maintain the lane and the deceleration control (or deceleration) for the braking.

The adjacent lane stop may indicate that the vehicle 10 leaves the lane where the vehicle 10 is currently driving and moves to another safer lane, and the braking is performed to thus cause the vehicle 10 to stop. At the adjacent lane stop, the autonomous driving system 100 may perform the acceleration control to leave the current driving lane, the lane change control to move to another lane, the lateral control for the lane movement or the lane maintenance, and the deceleration control to perform the braking.

The autonomous driving system 100 may perform another stop type when the safe zone, searched for through an external server or a road side unit (RSU), is available, and another stop type may include, for example, a shoulder stop, a parking lane stop, or like for the vehicle to stop on a shoulder or a parking/stopping zone.

The shoulder stop may be classified into a full-shoulder stop in a case where the shoulder has a width (e.g., 2 m) that includes the lane, and a half-shoulder stop in the other cases.

In addition, the determined MRM type may be flexibly changed based on a change in the internal or external environment, and the autonomous driving system 100 may execute the MRM operation based on the determined type (34). When the vehicle 10 stops based on the finally determined type, the vehicle 10 may here reach the mode where the risk is minimized to the MRC.

In addition, as described above, the autonomous driving system 100 may also request the fallback ready user to intervene during the MRM operation, and directly hand over the control right to the fallback ready user (26).

That is, the autonomous driving system 100 may detect a situation where the autonomous driving is impossible or restricted in the normal mode, and control the driving based on the type determined by the MRM module for the fallback. However, the failure situation that causes the MRM may occur depending on an interrelationship of the components in the autonomous driving system 100 or the problem occurring in the external power or the network. The components in the autonomous driving system 100 may need to be classified and configured independently of each other to provide a more efficient fallback by using a device that may be operated.

Therefore, it is necessary to determine the MRM type and perform the MRM operation by using the device that may be operated even though the operation is impossible due to the problem occurring in some sensors or the power supply.

The autonomous driving system 100 according to this embodiment may effectively separate or overlap internal components from or with each other based on this purpose.

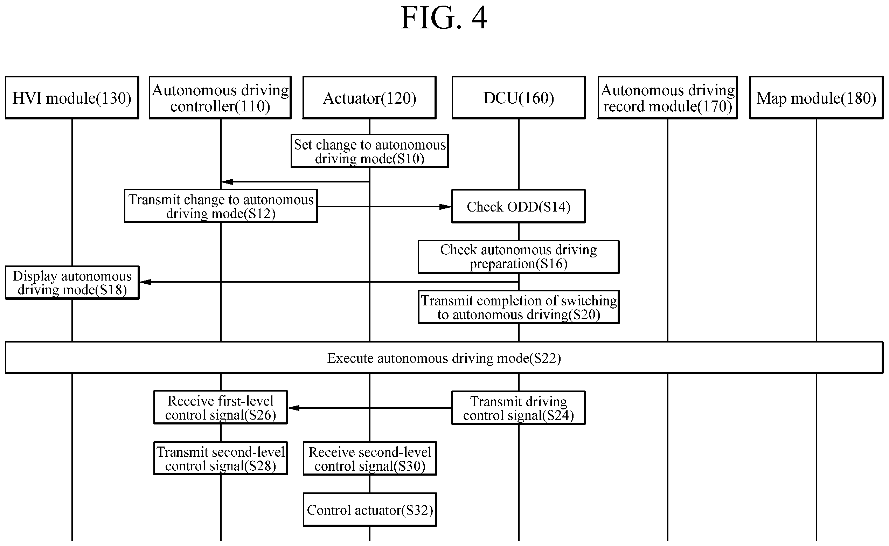

Hereinafter, the description describes the operation of the autonomous vehicle 10 to perform the above-described MRM with reference to FIGS. 4 to 9.

FIG. 4 is a diagram showing a basic process of switching from the manual driving mode to the autonomous driving mode while there is no set destination.

The process in FIG. 4 may be operated in a mode where the driver commands switching from the manual driving mode to the autonomous driving mode, and each module is thus switched to the autonomous driving mode or a mode where each module is switched to the autonomous driving mode to thus execute automatic longitudinal or lateral control such as the lane maintenance, vehicle speed maintenance, or vehicle distance maintenance without navigation control to the destination because there is no destination set by the driver.

When the change to the autonomous driving mode is set (S10), a corresponding change request signal may be transmitted to the autonomous driving controller 110.

The autonomous driving controller 110 may transmit the change to the autonomous driving mode to the DCU 160 based on the corresponding request signal (S12). The DCU 160 may determine whether a corresponding zone is within an operational design domain (ODD), i.e., zone designed for the autonomous driving, based on the current location of the autonomous vehicle 10 (S14).

In addition, the DCU 160 may check the modes of the sensor and other autonomous driving modules to check their preparations for the autonomous driving. Here, the DCU 160 may also check a preparation mode of whether the fallback for the failure state of the autonomous driving is possible (S16).

If there are no abnormalities from a check result, the DCU 160 may display the autonomous driving mode by using the HVI module 130 for the user to recognize the corresponding mode (S18).

Next, the DCU 160 may transmit completion of the switching to the autonomous driving to each device in the vehicle 10 for the autonomous driving mode to be executed (S20, S22).

In detail, after the mode is switched to the autonomous driving mode, the DCU 160 may transmit a driving control signal to the autonomous driving controller 110 (S24).

The autonomous driving controller 110 may receive a first-level control signal among the driving control signals (S26). The first-level signal may be a relatively high level of control, and may include a signal for controlling the above-described second controller for the autonomous driving.

In addition, a relatively low second-level control signal among the driving control signals may be transmitted to the actuator 120 (S28), and the actuator may perform actuator control for the steering control and the acceleration or deceleration control based on the received second-level signal (S32).

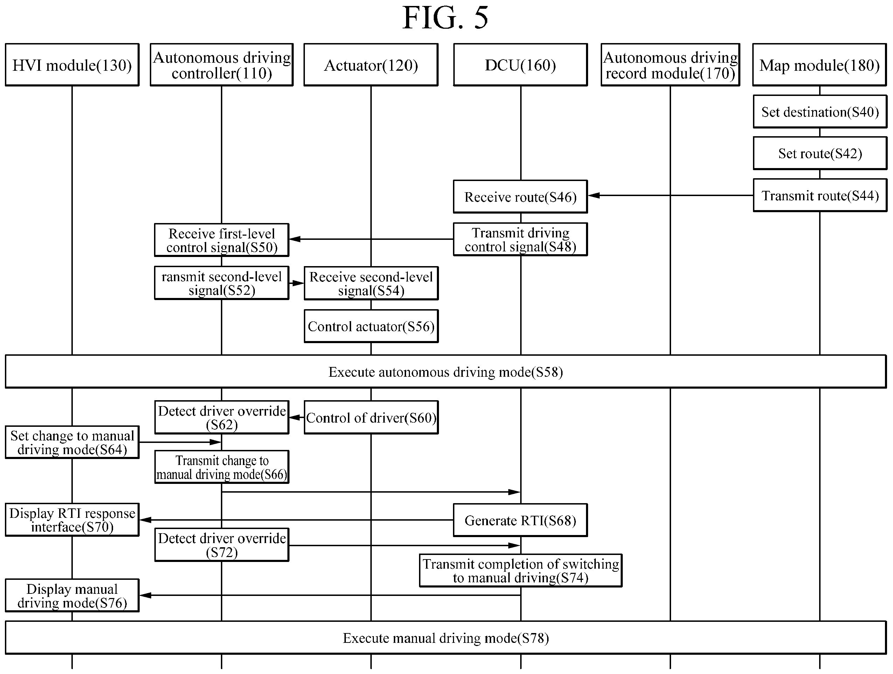

Hereinafter, the description describes the operation of the autonomous vehicle 10 when the destination is set and the autonomous driving mode is terminated in this situation with reference to FIG. 5.

Referring to FIG. 5, the description describes the operation of the autonomous vehicle 10 in a mode where the mode is switched to the autonomous driving mode, the driver sets the destination, the vehicle executes the automatic longitudinal or lateral control such as the lane maintenance, the vehicle speed maintenance, or the vehicle distance maintenance, and the control includes the navigation control to the destination.

In addition, the above-described mode may be a mode where the driving mode is switched from the autonomous driving mode to the manual driving mode by a driver behavior in one of the following two cases where the driver commands the switching to the manual mode by using the HVI or the vehicle receives an indirect switching command to the manual mode by the driver performing the steering or braking manipulation.

Referring to FIG. 5, the user may set the destination by using a map module 180 (S40), and set the current location of the vehicle 10 and its route to the destination by using a global navigation satellite system (GNSS) (S42). The set route may be transmitted to the DCU 160 (S44), the DCU 160 may receive route information (S46), and transmit control signals for autonomous driving on the received route (S48).

Here, in a case where the current location of the vehicle 10 is within the ODD as described above, as an example disclosed in FIG. 4, and the destination is outside the ODD, the DCU 160 may request the vehicle 10 to be operated in the autonomous driving mode up to a boundary of the ODD and request the vehicle 10 to be operated in the manual driving mode thereafter.

In addition, in a mode where the driver directly intervenes and regains the control right to control the vehicle in the manual driving mode when the autonomous driving mode is terminated or expected to be terminated, the vehicle may perform the driving based on whether the driver overrides.

The DCU 160 may receive the route (S46), and transmit the driving control signal for the driving on the corresponding route to the autonomous driving controller 110 (S48).

The autonomous driving controller 110 may receive the first-level control signal among the driving control signals as described above (S50). The first-level signal may be the relatively high level of control, and may include the signal for controlling the above-described second controller for the autonomous driving.

In addition, the relatively low second-level control signal among the driving control signals may be transmitted to the actuator 120 (S52), and the actuator may receive the second-level signal (S54), and perform the actuator control for the steering control and the acceleration or deceleration control (S56) based thereon.

Accordingly, the autonomous driving mode may be executed (S58). Next, the description describes the operation of the autonomous vehicle 10 when switched to the manual driving mode while executing the autonomous driving mode.

While the autonomous driving mode is executed, the user may set the change to the manual driving mode by using HVI module 130. For example, the user may directly change the mode to the manual driving mode through the input interface (S64). Alternatively, the actuator 120 may receive the control signal for the acceleration or the deceleration by direct control of the driver (S60) .

Therefore, the autonomous driving controller 110 may receive the control signal from the actuator 120 and detect the driver override (S62), or transmit the change to the manual driving mode to the DCU 160 when receiving the change to the manual driving mode by using the HVI (S66).

The DCU 160 may generate the request for the driver to intervene (RTI) in the autonomous driving (S68).

As the RTI is generated, the HVI module 130 may display an RTI response interface to thus request the fallback ready user (FRU) for the failure situation to take over the driving control right (S70).

In response to this request, the user may directly input that the user is to manually drive the vehicle through the interface, or input the same into the actuator 120 by means of the deceleration or acceleration control.

Accordingly, when detecting the driver override (S72), the vehicle 10 may complete its switching to the manual driving mode(S74) and transmit the mode switching completion to the HVI module 130, thus allowing the HVI to display the driving mode as the manual driving mode (S76).

Each module may then be operated in the manual driving mode (S78) .

That is, after the driver's control or change to the manual driving mode is initially set, the vehicle 10 may explicitly request the RTI, and finally complete its driving as the manual driving when receiving the response thereto, thereby implementing a process enabling the changes in the driving mode to be performed more reliably in the autonomous driving situation.

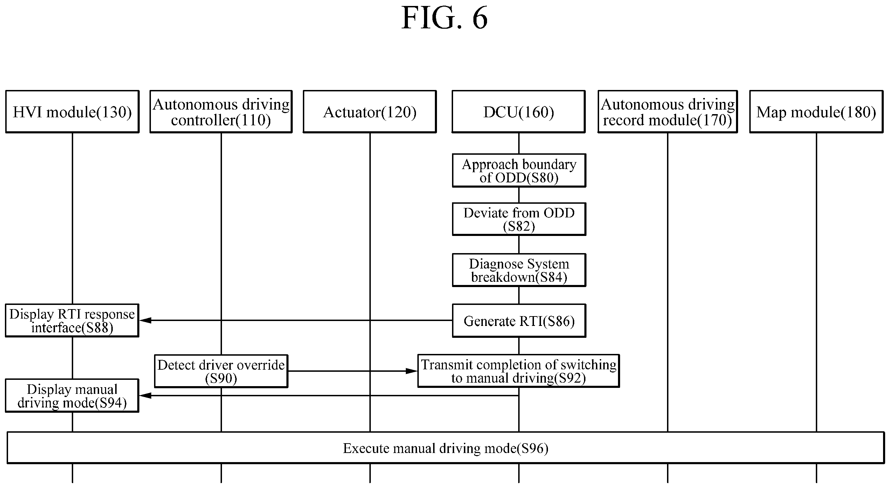

Next, the description describes a more active fallback operation of the autonomous vehicle 10 for the failure situation with reference to FIG. 6.

Referring to FIG. 6, the description describes the operation of the vehicle 10 when the MRM is executed by recognizing a predefined failure situation in the autonomous driving.

In detail, the autonomous driving mode may be switched to the manual driving mode by the system in one of the following three cases: For example, the autonomous vehicle 10 may continue its current driving route based on the ODD to thus be expected to approach the boundary of the ODD and then eventually deviate from the ODD, or the autonomous vehicle 10 may already deviate from the ODD. In this case, the vehicle may generate the RTI and display the interface for requesting the driver to intervene in the driving through HVI module 130, thus requesting for the driver to regain the control right.

Alternatively, the vehicle 10 may perform the MRM process when the vehicle 10 is diagnosed as being in a mode where the vehicle 10 is unable to continue its current autonomous driving because an error, a breakdown, or the like occurs in all or some of the autonomous driving system and its major components.

First, in relation to the ODD, the DCU 160 may receive the current driving mode of the vehicle 10 and predict in advance that the vehicle 10 is expected to approach the boundary of the ODD on the route, and then deviate from the ODD (S80). The DCU 160 may determine a deviation time point and a deviation point by comparing the current speed and route of the vehicle 10 with the ODD in linkage with the map module 180.

Therefore, in this case, the DCU 160 may request the user to intervene in the driving in advance and generate the RTI to request a user response (S86).

Alternatively, when the vehicle already deviates from the ODD (S82), the DCU 160 may generate the RTI (S86), and display the RTI response interface by using the HVI module 130 (S88). When detecting the driver override through the interface (S90), the DCU 160 may complete the switching to the manual driving and transmit the same to the HVI module 130 (S92), thus allowing the HVI module 130 to display that the driving mode is switched to the manual driving mode (S94).

Further, each device of the vehicle 10 may execute its operation based on the manual driving mode (S96).

In addition, as described above, the vehicle may perform the operations through the same process even when the error or the breakdown occurs in the autonomous driving system other than the deviation from the ODD to thus cause the failure situation in the autonomous driving (S84).

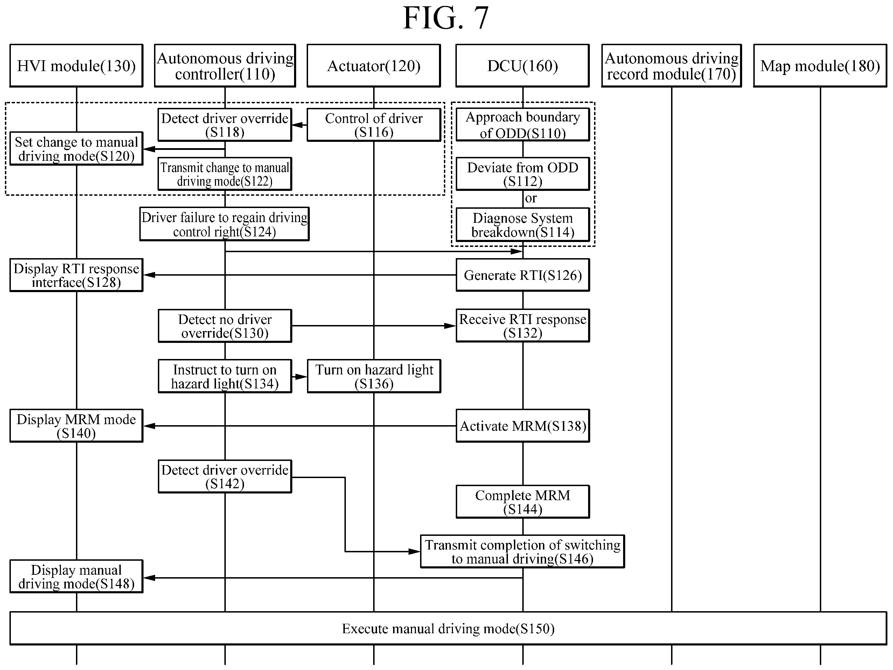

Next, referring to FIG. 7, the description describes a situation where the MRM is activated because the driver does not respond to the RTI even though the failure situation occurs or the driver override is not detected.

FIG. 7 shows the operation of the autonomous vehicle 10 in the situation where the MRM is operated because the driver does not show a driving manipulation response while the driving mode is switched from the autonomous driving mode to the manual driving mode by the system in one of the following cases.

In addition, FIG. 7 subsequently shows a case where the driver successfully regains the control right even after the MRM is activated.

FIG. 7 shows that the RTI may be generated, and the MRM process may be operated based on the RTI even when the driver sets the switching to the manual mode by using the HVI module 130 (S120), and then fails to take over the driving control right (S124), or even when the driver performs the steering or braking manipulation by using the actuator 120(S116) and initial driver override is thus detected (S118), and the driver then fails to take over the driving control right (S124).

In addition, the MRM may be operated even when the autonomous vehicle 10 continuously maintains the current driving route and is thus expected to deviate from the operational design domain (ODD) (S110) or even when the autonomous vehicle 10 already deviates from the ODD (S112) and the driver fails to take over the driving control right (S124).

In addition, the MRM may be operated even when a mode where the vehicle is unable to continue the current autonomous driving because the error or the breakdown occurs in all or some of the autonomous driving system and its major components (S114), or even when the driver fails to take over the driving control right (S124).

Therefore, the DCU 160 may preferentially generate the RTI (S126). The DCU 160 may generate the RTI, and display the RTI response interface by using the HVI module 130 (S128).

Here, when detecting no user override (S130), the DCU 160 may receive the response thereto(S132). In order to s the MRM, the autonomous driving controller 110 may first instruct a turn on a hazard light to inform an external surrounding that the failure situation occurs in the autonomous vehicle 10 and there is no driver intervention (S134).

The actuator 120 may turn on the hazard light to make the surrounding external vehicles 10 aware of the situation (S136) .

Next, the DCU 160 may activate the MRM (S138), and may also display an MRM mode interface by using the HVI module 130 for the MRM activation to be recognized even when the driver fails to intervene (S140). In addition, in the situation of level 4 or higher where the driver is not essential, the DCU 160 may allow a passenger or the user to recognize that the MRM operation is performed.

When the MRM is activated, the MRM module in the autonomous driving controller 110 may monitor the mode of the autonomous driving system 100, and determine the MRM type based on the internal or external environment, as described above. The MRM type may be classified based on the stop situation, and may be classified into the straight stop, the in-lane stop, the adjacent lane stop, and the shoulder stop.

When the MRM is performed, and the vehicle 10 stops based on the finally determined MRM type, the vehicle 10 may here complete the MRM in a mode where its risk is minimized to the MRC (S144).

Here, when the vehicle has difficulty in its stop based on the type, the MRM may request an additional safe zone (or safety area) .

Furthermore, in this embodiment, the MRM may request the safe zone based on the deviation point and deviation time point when the activated MRM predicts in advance that the vehicle 10 is expected to approach the boundary of the ODD and then deviates from the ODD.

The map module 180 may be performed when the safe zone, searched for through the external server or the road side unit (RSU), is available. As an example, the MRM may request in advance a specific location of the shoulder or parking zone for the vehicle to stop on the shoulder or the parking/stopping zone, set the driving route for the vehicle to reach the corresponding zone, and specifically request the driver to intervene in the driving based on the driving route.

Alternatively, the MRM may enable the fallback by making the request for the driver to intervene in the driving of the vehicle 10 at a time point when the deviation is predicted or in advance from this time point.

In detail, the MRM may enable the fallback in advance of the deviation time point by considering the speed and braking distance of the vehicle 10, congestion due to a road traffic situation, or the like at the deviation time point.

For example, the MRM may enable the autonomous vehicle to stop at a safe stop zone by searching for a full-shoulder stop zone as the safe zone for some sections step by step from the expected deviation time point, and then searching for a half-shoulder stop zone from a next section to the expected deviation time point when the safe zone is not searched for during the above sections.

Therefore, the MRM may allow the fallback for the MRM situation in advance and the fallback to an external environmental variable based on a change in various road situations.

A mode of the vehicle that performs the MRM may be controlled horizontally and vertically (by also using map data in some cases), and in order to minimize its impact on a traffic flow, the vehicle 10 may request a location of the shoulder closest to the ODD deviation prediction point as the safe zone.

When the full-shoulder stop is available as the safe zone based on the request result, the vehicle may stop by receiving information thereon from the control server.

That is, in this embodiment, the DCU 160 may predict the deviation point of the ODD on the route and request the safe zone in advance to thus allow a vehicle capable of the lateral /vertical control among broken vehicles to stop on the shoulder zone in advance, thereby minimizing its affect on the traffic flow and reducing accident situations caused by the broken vehicle.

In addition, in the case of the shoulder stop, it is possible to more smoothly perform evacuation of the passengers in the autonomous vehicle. Therefore, it is possible to preferentially execute a request of the passenger in the autonomous vehicle for the emergency stop or an external request for a remote stop of the autonomous vehicle.

In addition, the DCU 160 may request the fallback ready user to intervene in the driving even during the MRM operation, and hand over the control right to the driver when detecting the user override (S142), and may transmit completion of the switching to the manual driving (S146), thus allowing the HVI module 130 to display the manual driving mode (S148). Each component may then execute the manual driving mode (S150).

In addition, when the autonomous vehicle 10 includes not only the driver but also a large number of the passengers, the passenger may recognize an external situation in advance, or determine the internal breakdown situation and request the emergency stop.

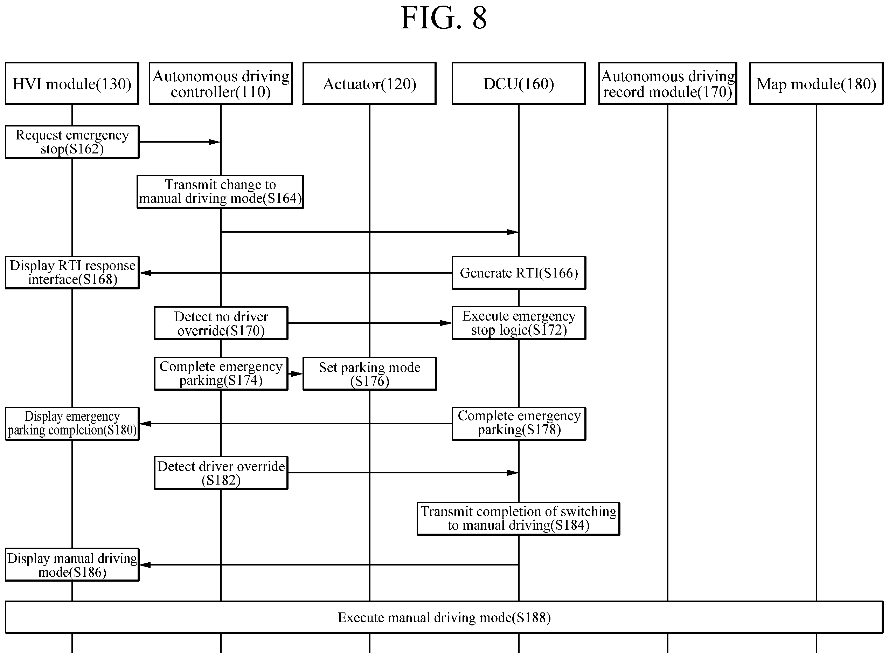

This case is described with reference to FIG. 8.

The case shown in FIG. 8 may include a case where the driver, the passenger, or the like presses an emergency stop button mounted in a shuttle bus or a large bus in the autonomous driving mode to cause the bus to stop.

In detail, the case shown in FIG. 8 may be classified into a case where the vehicle performs the emergency stop based on the MRM when the driver does not regain the control right by means of the driving manipulation, or the driver regains the driving control right by performing the steering or braking manipulation.

Referring to FIG. 8, the driver or the passenger may request the emergency stop by pressing the emergency stop button included on the interface, for example, the HVI module 130 (S162).

When receiving the emergency stop request, the autonomous driving controller 110 may transmit the change to the manual driving mode to the DCU 160 (S164).

The DCU 160 may receive the change to the manual driving mode, generate the RTI (S166), and make the request for the driver to intervene by using the HVI module 130 (S168). When detecting no override because the driver does not respond even though the passenger requests the emergency stop (S170), the DCU 160 may execute emergency stop logic (S172), and the autonomous driving controller 110 may complete emergency parking (S174) and set a parking mode by using the actuator 120 (S176).

In addition, the DCU 160 may allow the HVI module 130 to display the emergency parking completion for the passenger or the driver to recognize the same and feel at ease (S178, S180).

In addition, when detecting the driver override (S182), the autonomous driving controller 110 may transmit the same again to the DCU 160, and the DCU 160 may complete the switching to the manual driving (S184).

When completing the switching to the manual driving, the DCU 160 may allow the HVI module 130 to display that the driving mode is switched to the manual driving mode (S186), and execute the manual driving mode (S188).

In addition, the emergency stop may be performed not only by the internal request but also by an external road control system or an infrastructure 20 linked to the RSU.

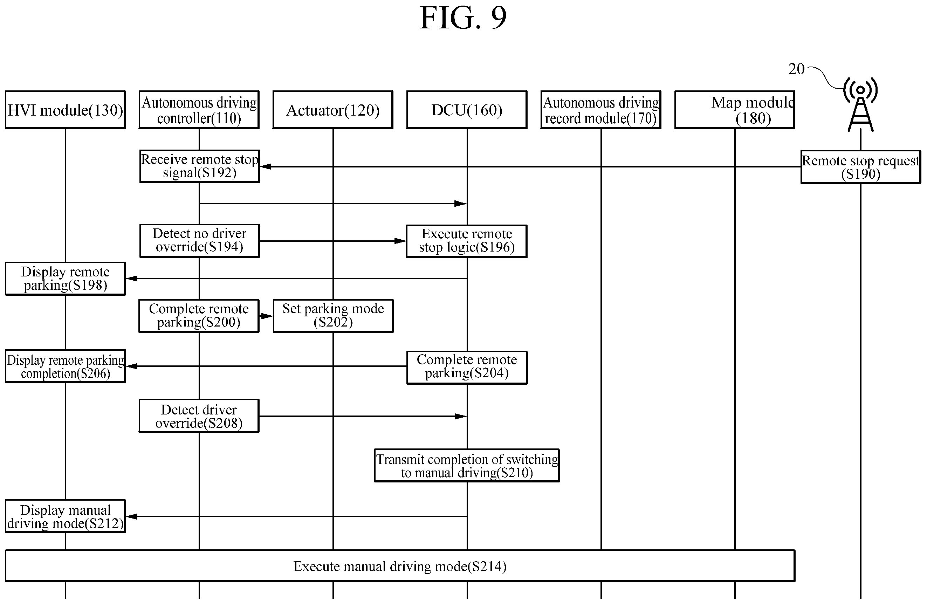

FIG. 9 shows the operation of the autonomous vehicle 10 in a case where the vehicle 10 in the autonomous driving mode receives a remote stop request as an instruction from the control system, and here, the driver does not regain the control right by the driving manipulation, or the driver regains the driving control right by manipulating the steering or the brake.

Referring to FIG. 9, when the remote stop request is made from an external device (S190), the autonomous driving controller 110 may receive a remote stop signal (S192).

The received remote stop signal may be transmitted to the DCU 160, and when detecting no driver override in response to the RTI (S194), the DCU 160 may execute remote stop logic (S196).

When the remote stop logic is executed, the HVI module 130 may display remote parking for the user to recognize the same (S198). The autonomous driving controller 110 may complete the remote parking (S200), and then set a parking mode by using the actuator 120 (S202). When completing the remote parking (S204), the DCU 160 may display, by using the HVI module 130, the remote parking completion after displaying the remote parking (S206).

In addition, when detecting the driver override (S208), the autonomous driving controller 110 may transmit the same again to the DCU 160, and the DCU 160 may complete the switching to the manual driving (S210).

When completing the switching to the manual driving, the DCU 160 may allow the HVI module 130 to display that the driving mode is switched to the manual driving mode (S212), and execute the manual driving mode (S214).

Furthermore, when receiving the remote stop request as an instruction from an external control center, and executing the remote stop logic because no driver override is detected, the vehicle 10 may receive information on the vehicle stop location based on the MRM type.

Therefore, before the vehicle 10 requests the safe zone, the control center may provide information on the safe zone together with the remote stop instruction, and the provided safe zone information may be used for the vehicle to stop on the corresponding location based on the MRM by using the map module 180.

In addition, an autonomous driving record module 170 may generate driving records in linkage with the map module 180 based on the signals of the DCU 160 and the autonomous driving controller 110 related to the above operations and geographical information on the corresponding location, and provide the vehicle with occurrence of dangerous situations in various road infrastructures and additional information on the surrounding vehicles based on the generated driving records.

The autonomous driving record module 170 may store information for 30 seconds or more before and after an occurrence/provision time point when an accident occurs or the fallback is provided while the autonomous vehicle drives, thereby enabling analysis to be performed on a cause of the accident or the breakdown.

As set forth above, according to the present invention, it is possible to increase the stability of the autonomous driving system when the emergency situation occurs.

In addition, the present invention may provide the best fallback method by proposing the stable mode switching method of the autonomous driving system.

In addition, the present invention may enable the safer fallback by implementing the request for the driver to intervene in the MRM operation or the safe zone search in advance.

The various embodiments described herein may be implemented in a computer-readable recording medium or a device similar thereto by using, for example, software, hardware, or a combination thereof.

According to hardware implementation, the embodiments described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electric units for performing other functions. In some cases, the embodiments described in the specification may be implemented by a control module itself.

According to software implementation, the embodiments such as the procedures and functions described in the specification may be implemented by separate software modules. Each of the software modules may perform one or more functions and operations described in the specification. A software code may be implemented as a software application written in a suitable programming language. The software code may be stored in a memory module and executed by the control module.

The spirit of the present invention has been illustratively described hereinabove. It is to be appreciated by those skilled in the art to which the present invention pertains that various modifications, alterations and substitutions may be made without departing from the essential features of the present invention.

Accordingly, the embodiments and the accompanying drawings disclosed in the present invention are provided not to limit the spirit of the present invention but to describe the present invention, and the scope of the present invention is not limited to the embodiments or the accompanying drawings. The scope of the present invention should be interpreted by the following claims, and all the spirit equivalent to the following claims should be interpreted to fall within the scope of the present invention.

## Claims

1. A method for providing a fallback for a failure situation occurring in autonomous driving performed by an autonomous driving system, the method comprising:
predicting whether a vehicle deviates from an operational design domain (ODD) where the vehicle performs the autonomous driving on a route while the vehicle drives; and
performing a minimal risk maneuver (MRM) process of controlling the vehicle to provide the fallback for the failure situation occurring in the autonomous driving based on a deviation point when the deviation is predicted.

2. The method of claim 1, wherein the MRM process includes
making a request for a vehicle driver to intervene in the autonomous driving at a time point when the deviation is predicted or in advance from the time point, and
changing a driving mode to a manual driving mode when a vehicle control right is given over to the driver by the driver intervention (or override).

3. The method of claim 2, wherein the MRM process includes instructing an emergency stop of the vehicle when the driver intervention is impossible.

4. The method of claim 3, wherein the MRM process is classified into necessary control operations based on a MRM type that determines a stop type by a diagnosis result of a failure cause of the vehicle.

5. The method of claim 4, wherein the MRM process requests safe zone information required based on the MRM type, and generates a route for the vehicle to stop on a received safe zone.

6. The method of claim 5, further comprising receiving a remote request to perform the MRM process from a control server when the deviation from the ODD or occurrence of the failure situation is determined as a monitoring result while the vehicle drives,
wherein the control server provides the safe zone information when making the request to perform the MRM process.
